# EUROPÄISCHE PATENTSCHRIFT

(11) **EP 3 930 485 B1**
(45) Veröffentlichungstag und Bekanntmachung des Hinweises auf die Patenterteilung: **28.08.2024**
(21) Anmeldenummer: 20710773.1
(22) Anmeldetag: 24.02.2020
(51) Int. Cl.: A23N 12/00, B07B 4/08, A01D 33/08

(54) **TRENNVORRICHTUNG**
SEPARATOR
SEPARATEUR

(30) Priorität: 01.03.2019 DE 102019105274
(43) Veröffentlichungstag der Anmeldung: 05.01.2022
(73) Patentinhaber: Grimme Landmaschinenfabrik GmbH & Co. KG, 49401 Damme (DE)
(72) Erfinder: MÜLLER, Fokke, 49356 Diepholz (DE); LÜBBE, Cord-Hinrich, 29351 Eldingen (DE)
(74) Vertreter: Wischmeyer, André
(86) Internationale Anmeldenummer: PCT/EP2020/054778
(87) Internationale Veröffentlichungsnummer: WO 2020/178059

(56) Entgegenhaltungen:
- EP-A1- 0 212 151
- WO-A2-2014/026766
- DD-A1- 210 847
- DE-C- 908 808
- DE-U1- 202016 100 858

## Beschreibung

Die Erfindung betrifft eine Trennvorrichtung zur Trennung von Früchten und Beimengungen. Bei den Früchten handelt es sich insbesondere um Hackfrüchte. Die Trennvorrichtung umfasst eine Förderstrecke mit zumindest einem Zuförderelement und einem Abförderelement, die im Betrieb umlaufen. Das Abförderelement schließt sich in Förderrichtung an das Zuförderelement an. Das Zuförderelement und/oder das Abförderelement ist/sind für die Früchte und die Beimengungen zumindest im Wesentlichen undurchlässig. Das Zuförderelement und das Abförderelement sind derart voneinander beabstandet, dass sie einen Trennspalt ausbilden.

Eine derartige Trennvorrichtung kommt insbesondere zur Reinigung geernteter Hackfrüchte und/oder zur Ein- oder Auslagerung derer zum Einsatz. Dabei gelangen die zu reinigenden Hackfrüchte auf die Förderstrecke und werden vom Zuförderelement und vom Abförderelement in Förderrichtung gefördert. Beimengungen, welche mit den Hackfrüchten auf die Förderstrecke aufgegeben wurden, sollen dagegen durch den Trennspalt hindurchtreten und so von den Hackfrüchten abgetrennt und letztere in ihrer Gesamtheit dadurch gereinigt werden.

Nachteilig an einer derartigen Trennvorrichtung ist, dass durch den Trennspalt im Betrieb lediglich kleinvolumige Beimengungen hindurchtreten, die bei einer länglichen Erstreckung ausreichend gemäß der Erstreckung des Spaltes ausgerichtet sind. Insbesondere Krautbestandteile sind durch den Trennspalt nur ungenügend abzuführen.

Die DD 210 847 A1, die DE 20 2016 100 858 U1 und die EP 0 212 151 A1 offenbaren derartige Trennvorrichtungen.

Aufgabe der vorliegenden Erfindung ist die Bereitstellung einer gattungsgemäßen Trennvorrichtung mit einer verbesserten Trennleistung und einer hohen Zuverlässigkeit.

Erfindungsgemäß wird die Aufgabe durch eine vorbezeichnete Trennvorrichtung nach Anspruch 1 gelöst, welche eine Fluidleiteinrichtung zum Leiten eines Fluidstroms durch den Trennspalt hat. Die Fluidleiteinrichtung weist eine Auslassöffnung auf, die zumindest abschnittsweise, insbesondere gänzlich, zwischen einer ersten Orthogonalebene und einer zweiten Orthogonalebene positioniert ist. Die erste Orthogonalebene ist zur Förderrichtung orthogonal angeordnet und eine Rotationsachse des Zuförderelementes in der ersten Orthogonalebene angeordnet. Die zweite Orthogonalebene ist zur Förderrichtung orthogonal angeordnet und eine Rotationsachse des Abförderelementes in der zweiten Orthogonalebene angeordnet.

Das Zuförderelement und/oder das Abförderelement ist/sind insbesondere als im Betrieb um die entsprechende Rotationsachse rotierende Förderwalze ausgebildet. Vorzugsweise weist die Förderwalze eine Mehrzahl von axial aneinandergrenzenden Walzensegmenten auf oder ist einteilig ausgebildet. Alternativ oder daneben ist/sind das Zuförderelement und/oder das Abförderelement als im Betrieb umlaufendes und um die Rotationsachse umgelenktes Förderband ausgebildet.

Das Abförderelement schließt sich insofern an das Zuförderelement an, als dass im Betrieb Früchte zuerst vom Zuförderelement und darauf folgend vom Abförderelement gefördert werden. Insbesondere ist zwischen dem Zuförderelement und dem Abförderelement kein weiteres, im Betrieb umlaufendes Förderelement angeordnet. Insbesondere haben die Früchte im Betrieb zwischen einem Aufliegen auf dem Zuförderelement und einem Aufliegen auf dem Abförderelement, ob mittelbar oder unmittelbar, keinen Kontakt zu einem weiteren Bestandteil der Trennvorrichtung.

Der Trennspalt ist bezogen auf die Förderrichtung einerseits durch das Zuförderelement und andererseits durch das Abförderelement begrenzt. Insbesondere ist der Trennspalt in dem Bereich ausgebildet, in welchem das Zuförderelement und das Abförderelement einander am nächsten kommen. Die Erstreckung des Trennspaltes in Förderrichtung ist insbesondere höchstens 85 mm, wobei die Spaltweite bevorzugt stufenlos, insbesondere zwischen 0 mm und 85 mm, insbesondere über ein oder mehrere dem Zu- und Abförderelement zugeordnete Stellmittel einstellbar ist. Dadurch wird insbesondere erreicht, dass im Betrieb keine Früchte unbeabsichtigt durch den Trennspalt treten.

Das Zuförderelement und das Abförderelement sind im Betrieb jeweils in einem an den Trennspalt angrenzenden Bereich um eine Rotationsachse umlaufend ausgebildet. Entweder ist dabei das Zuförderelement bzw. das Abförderelement im Betrieb unmittelbar oder, insbesondere bei einem Förderband als Zu- bzw. Abförderelement, ein Umlenkelement für das Zuförderelement bzw. das Abförderelement um die Rotationsachse drehend ausgebildet.

Die Rotationsachse des Zuförderelementes ist vorzugsweise parallel zur Rotationsachse des Abförderelementes angeordnet. Alternativ sind die Rotationsachsen zueinander geringfügig verschwenkt, wodurch sich insbesondere ein Trennspalt ergibt, dessen Weite entlang seiner Erstreckung parallel zu einer der Rotationsachsen variiert. Das Zuförderelement und das Abförderelement sind insbesondere ausgebildet zu einem gleichsinnigen Umlaufen. Alternativ oder zusätzlich sind das Zuförderelement und das Abförderelement zumindest in einem möglichen Betriebsfall gegensinnig umlaufend, d.h. dem Trennspalt jeweils von oben zufördernd ausgebildet.

Die Rotationsachse des Abförderelementes ist relativ zur Rotationsachse des Zuförderelementes in Förderrichtung versetzt angeordnet und insbesondere um mehr als den Radius des Zuförderelementes in eine horizontale Richtung versetzt. Insbesondere liegen beide Rotationsachsen in einer Rotationsachsenebene, in der sich bevorzugt auch der Trennspalt erstreckt. Die Förderrichtung ist die Richtung, in die ein Strom von Früchten durch das Zuförderelement und das Abförderelement global gesehen gefördert wird. Insbesondere ist die Förderrichtung parallel zu einer Geraden, die in einem Längsschnitt der Trennvorrichtung sowohl das Zuförderelement als auch das Abförderelement tangiert, und/oder parallel zur Rotationachsenebene, d.h. zu einer durch die Rotationsachsen verlaufenden Ebene. Insbesondere bei einer Mehrzahl von Zu- und Abförderelementen, die unterschiedliche Radien und/oder Rotationsachsen auf unterschiedlichen Höhen haben, kann die Förderrichtung entlang der Förderstrecke variieren, wobei die Förderrichtung pro Paar von Zu- und Abförderelement nur von dessen Geometrie abhängig und eindeutig ist.

Das Zuförderelement und/oder das Abförderelement ist/sind insofern undurchlässig, als dass die Früchte und die Beimengungen im Wesentlichen nicht durch eine den Früchten im Betrieb zugewandte Förderoberfläche des Zuförderelementes bzw. des Abförderelementes hindurchtreten können. Insbesondere handelt es sich bei dem Zuförderelement bzw. dem Abförderelement um ein Förderelement mit einer nach außen gerichteten und sich in Umlaufrichtung erstreckenden Förderoberfläche, die insbesondere quer zur Umlaufrichtung durchgehende Ausnehmungen höchstens in einem solchen Maße aufweist, dass die gesamte Förderfläche größer ist als die kumulierten und sich ebenfalls in Umlaufrichtung erstreckenden Querschnittsflächen der Ausnehmungen. Bevorzugt hat das Zuförderelement bzw. das Abförderelement eine in Umfangsrichtung gänzlich geschlossene Förderfläche, bevorzugt über dessen gesamte radiale Erstreckung. Vorzugsweise sind sowohl das Zuförderelement als auch das Abförderelement im Wesentlichen undurchlässig. Vereinzelte durchlässige Öffnungen, wie etwa beschädigte Förderflächenbereiche oder Spalte zwischen unterschiedlichen Bestandteilen des Zuförderelementes bzw. des Abförderelementes, etwa zwischen Walzensegmenten, stehen der im Wesentlichen gegebenen Undurchlässigkeit dabei nicht entgegen.

Die Fluidleiteinrichtung ist insbesondere ortsfest ausgebildet und bevorzugt zum Leiten eines Luftstroms ausgebildet. Die Auslassöffnung ist dabei derart orientiert, dass ein durch die Auslassöffnung hindurchtretender Fluid- bzw. Luftstrom zumindest im Wesentlichen auf den Trennspalt gerichtet ist. Der Luftstrom wird von der Fluidleiteinrichtung insbesondere zumindest anteilig aufwärts durch die Auslassöffnung geleitet und trifft im Betrieb bevorzugt von unten auf die zu reinigenden Früchte und Beimengungen. Die Fluidleiteinrichtung umfasst insbesondere im Bereich der Auslassöffnung eine Düse, d.h. eine Querschnittsverengung, durch die der im Betrieb geleitete Fluidstrom beschleunigt wird.

Durch die Fluidleiteinrichtung wird im Betrieb der Fluidstrom durch den Trennspalt auf die geförderten Früchte und Beimengungen geleitet. Der Strom geförderter Früchte und Beimengungen und der Fluidstrom kreuzen sich insbesondere oberhalb des Trennspaltes. Vom Fluidstrom werden dabei Beimengungen mit einer gegenüber den Früchten geringeren Dichte angehoben und somit von den Früchten abgetrennt. In der Praxis können somit insbesondere Kraut- bzw. Wurzelbestandteile, von denen die Früchte getrennt bzw. zu trennen sind, von den Früchten entfernt werden. Die Trennvorrichtung ist dabei insbesondere zur Reinigung von Kartoffeln, Rüben, Zwiebeln und/oder Möhren ausgebildet.

Die Orthogonalebenen sind jeweils rechtwinklig zur Förderrichtung angeordnet, d.h. parallel zueinander, und im Falle einer horizontalen Förderrichtung vertikal angeordnet. Zwischen den Orthogonalebenen liegt ein gedachter Raum, in dem insbesondere dem Trennspalt zugewandte Abschnitte bzw. Hälften des Zuförderelementes und des Abförderelementes angeordnet sind. Auch der Trennspalt ist in diesem Raum angeordnet.

Dadurch, dass die Auslassöffnung zumindest abschnittsweise, insbesondere gänzlich, zwischen den Orthogonalebenen angeordnet ist, wird der Fluidstrom im Betrieb besonders zielgerichtet und konzentriert durch den Trennspalt geleitet. Insbesondere sind auch die Auslassöffnungen begrenzende Leitelemente zumindest abschnittsweise, insbesondere gänzlich, zwischen den Orthogonalebenen angeordnet, so dass der Fluidstrom erst in unmittelbarer Nähe zum Trennspalt aus der Fluidleiteinrichtung austritt und bevorzugt erst dabei auf seine Maximalgeschwindigkeit beschleunigt wird. Vorteilhaft auf die Wirkung des Fluidstroms wirkt sich die Undurchlässigkeit des Zuförderelementes bzw. des Abförderelementes insofern aus, als dass dessen Oberfläche eine Leitfunktion für den Fluidstrom zwischen der Auslassöffnung und dem Trennspalt übernimmt, wodurch Strömungsverluste an etwaigen Öffnungen des Zuförderelementes bzw. des Abförderelementes vermieden werden. Dadurch lässt sich bei minimalem notwendigem Energieaufwand eine besonders hohe Trennleistung bewirken und insbesondere Krautbestandteile zuverlässig aus einem Förderstrom von Früchten trennen bzw. ausblasen. Durch die Positionierung der Leitelemente sowie der Auslassöffnung zwischen den Orthogonalebenen kann der davon benötigte Bauraum auf ein Minimum beschränkt werden, wodurch für die erfindungsgemäße Trennvorrichtung die Verwendung konventioneller und besonders zuverlässiger Bestandteile gattungsgemäßer Trennvorrichtungen verwendet werden können.

Vorzugsweise ist die Auslassöffnung in einem Längsschnitt zumindest abschnittsweise, insbesondere gänzlich, unterhalb des Zuförderelementes und/oder des Abförderelementes angeordnet. Insbesondere im Falle einer horizontalen Rotationsachsenebene ist somit die Auslassöffnung nicht unmittelbar unterhalb des Trennspaltes angeordnet. Insbesondere liegt die Auslassöffnung in dem Längsschnitt außerhalb einer Fläche, welche von links und rechts des Trennspaltes verlaufenden Vertikalen begrenzt wird. Durch diese Anordnung der Auslassöffnung wird die Fluidleiteinrichtung insofern geschützt, als dass durch den Trennspalt hindurchtretende Beimengungen, insbesondere im Fall eines nur geringfügigen Fluidstroms, nicht schwerkraftbedingt durch die Auslassöffnung in die Fluidleiteinrichtung gelangen und dessen Funktion somit einschränken oder gefährden.

Weiterer Vorteil einer unterhalb des Trennspaltes seitlich versetzten Auslassöffnung ist die erleichterte Erzeugung eines Fluidstroms, dessen Richtung von einer Vertikalen um zumindest 10°, insbesondere um zumindest 20°, abweicht und insbesondere anteilig mit der Förderrichtung zusammenfällt. Insbesondere ist die Fluidleiteinrichtung so ausgebildet, dass der Fluidstrom nicht bzw. geringstmöglich oberhalb des Trennspaltes vom Abförderelement abgelenkt oder reflektiert wird. Durch diese Ausrichtung lassen sich die durch den Fluidstrom abgetrennten Beimengungen besonders einfach gesondert auffangen bzw. abfördern und eine erneute Ablagerung derer auf den weitergeförderten Früchten vermeiden. Dadurch lässt sich die Effizienz der Trennvorrichtung erhöhen. Besonders bevorzugt wird die Auslassöffnung in dem Längsschnitt nicht von einer vertikal verlaufenden Tangente des Zuförderelementes oder des Abförderelementes geschnitten, um die vorbezeichnete Wirkung auch im Falle einer Überlagerung von Zuförderelement und Abförderelement in einer Projektion derer auf eine Horizontale zu erreichen.

Bevorzugt ist in dem Längsschnitt ein Leitelement der Fluidleiteinrichtung zumindest abschnittsweise derart oberhalb der Auslassöffnung angeordnet, dass es sich von einer in Förderrichtung vor der Auslassöffnung verlaufenden Vertikalen bis zu einer in Förderrichtung hinter der Auslassöffnung verlaufenden Vertikalen erstreckt. Die Vertikalen schneiden die Auslassöffnung nicht. Bei dieser Ausbildung wird die Auslassöffnung von dem Leitelement derart abgedeckt, dass Beimengungen zumindest nicht allein schwerkraftbedingt durch die Auslassöffnung hindurchtreten können. Auch dadurch wird die Fluidleiteinrichtung geschützt und ihre Zuverlässigkeit damit erhöht. Gleichzeitig wird durch den durch das Leitelement erzeugten seitlichen Austritt des Fluidstroms aus der Fluidleiteinrichtung die beabsichtigte Ausrichtung des Fluidstroms erleichtert.

Die genannten Vertikalen und als vertikal bezeichnete Richtungen und Achsen verlaufen insbesondere orthogonal zu einer insbesondere horizontalen Aufstandsfläche der Trennvorrichtung und/oder in Richtung der Schwerkraft. Eine Horizontale ist dazu insbesondere im Längsschnitt rechtwinklig und parallel zur Aufstandsfläche.

In einer vorteilhaften Ausgestaltung der Erfindung ist eine Oberflächenkontur des Zuförderelementes und/oder des Abförderelementes in einer ortsfesten Radialebene, in der die Rotationsachse des Zuförderelementes bzw. des Abförderelementes liegt, beim Umlauf des Zuförderelementes bzw. des Abförderelementes unveränderlich. Die Form der Förderfläche des Zuförderelementes bzw. des Abförderelementes variiert somit in Umlaufrichtung nicht. In axialer Richtung variiert dagegen in einer bevorzugten Ausgestaltung der Erfindung der Radius der Oberfläche und bildet etwa in Umlaufrichtung verlaufende Rillen aus. In einer abweichenden, besonders bevorzugten Ausgestaltung der Erfindung ist das Zuförderelement bzw. das Abförderelement als Glattwalze, insbesondere aus Stahl, ausgebildet. Durch die vorbeschriebenen Ausbildungen des Zuförderelementes und/oder des Abförderelementes wird erreicht, dass der Fluidstrom im Betrieb durch etwaige Veränderungen der Ausbildung des Trennspaltes nicht beeinträchtigt wird. Stattdessen bewirkt die in Umlaufrichtung einheitliche Oberflächenkontur einen möglichst laminaren Fluidstrom, die dessen Effekt zur Abtrennung von Beimengungen besonders zuverlässig macht.

In einer alternativen, vorteilhaften Ausgestaltungsform ist zumindest das Zuförderelement oder das Abförderelement zumindest abschnittsweise dergestalt spiralförmig ausgebildet, dass es zumindest einen anteilig in Umfangsrichtung verlaufenden und anteilig axial verlaufenden Spiralsteg aufweist, der sich insbesondere von einer zumindest im wesentlichen zylindrischen Mantelfläche in radialer Richtung abhebt. Insbesondere hat das Zu- bzw. Abförderelement mehrere und in einem Querschnitt in Umfangsrichtung voneinander beabstandete Spiralstege. Durch die Spiralstege wird im Betrieb eine zumindest anteilig axiale Bewegung der Hackfrüchte ausgelöst und somit die Zeit, während derer sie sich im Bereich oberhalb des Trennspaltes befinden, verlängert und die Reinigungsleistung verbessert.

Bevorzugt haben sowohl das Zu- als auch das Abförderelement zumindest einen Spiralsteg. Bei gleichsinniger Umlaufrichtung von Zu- und Abförderelement sind die Spiralstege insbesondere übereinstimmend nach Art eines Rechts- oder eines Linksgewindes ausgebildet. Bei gegensinniger Umlaufrichtung von Zu- und Abförderelement sind deren Spiralstege insbesondere gegensätzlich, d.h. mit gegensinniger Steigung ausgebildet. Bevorzugt haben die Spiralstege dabei betragsmäßig die gleiche Gewindesteigung. Dadurch wird erreicht, dass die Spiralstege am Spalt miteinander korrespondieren und im Betrieb bevorzugt miteinander kämmen, vorzugsweise zumindest weitgehend ohne aneinander anzuliegen. In einem Längsschnitt umfassend beide Rotationsachsen bewegen sich die geschnittenen Teile der Spiralstege im Betrieb insbesondere mit übereinstimmender Geschwindigkeit in axialer Richtung. Insbesondere taucht zumindest ein Spiralsteg im Bereich des Trennspaltes mit einer Spiralsteggewindespitze zumindest teilweise in einen gegenüberliegenden Spiralsteggewindegrund des gegenüberliegenden Ab- bzw. Zuförderelementes ein. Die Mantelfläche des Zu- bzw. Abförderelementes wird insbesondere durch sich in axialer Richtung abwechselnde Spiralsteggewindespitzen und -gründe ausgebildet. Durch diese Ausgestaltung lässt sich ein Trennspalt bilden, der zwischen Zu- und Abförderelement insbesondere gewunden, d.h. geschlängelt, ausgebildet ist und dessen effektive Länge größer ist als die Breite des Zu- bzw. Abförderelementes, wodurch der Fluidstrom eine umfangreichere Trennwirkung entfaltet. Außerdem wird der Hackfruchtstrom somit im Betrieb umgewälzt, wodurch ein größerer Anteil von Beimengungen temporär an die Oberfläche des Hackfruchtstroms gelangt und so leicht abgeblasen werden kann.

Besonders bevorzugt hat das Abförderelement zumindest einen Spiralsteg und ist das Zuförderelement als Glattwalze ausgebildet. Dadurch lässt sich ob der Glattwalze im Betrieb noch ein weitgehend laminarer Fluidstrom ausbilden, während sich trotzdem eine Bewegungskomponente in axialer Richtung in den Hackfruchtstrom einleiten und eine Umwälzung des Hackfruchtstroms erzeugen lässt.

Bevorzugt ist der Radius des Zuförderelementes größer als der Radius des Abförderelementes, d.h. dass der Abstand der Rotationsachse des Zuförderelementes vom Trennspalt größer ist als der Abstand der Rotationsachse des Abförderelementes vom Trennspalt. Insbesondere ist der Radius des Zuförderelementes zumindest 1,2-fach, besonders bevorzugt zumindest dreifach so groß wie der Radius des Abförderelementes. Im Falle während des Betriebes variierender Radien von dem Zuförderelement und/oder dem Abförderelement betrifft das Verhältnis deren mittlere Radien. Vorteil dieses Größenunterschiedes ist bereits ab einem Verhältnis von 1,2 zum einen, dass die Auslassöffnung unmittelbar unter dem Zuförderelement positioniert werden kann und somit geschützt ist und der Fluidstrom trotzdem zumindest weitgehend geradlinig aus einer gegenüber einer Vertikalen verschwenkten Fluidstromrichtung in den Trennspalt gelangt. Das kleinere Abförderelement minimiert zum anderen eine Umlenkung des Fluidstromes oberhalb des Trennspaltes durch die Abförderelementoberfläche. Somit kann der Fluidstrom auch oberhalb des Trennspaltes mit den abzublasenden Beimengungen weitgehend ohne durch das kleinere Abförderelement bewirkte Strömungsverluste in die vorbeschriebene Fluidstromrichtung weiterströmen, was aufgrund derer mit der Förderrichtung zusammenfallenden Richtungskomponente einen Abtransport der Beimengungen und somit eine effiziente Reinigung erleichtert. Insbesondere lassen sich die Beimengungen in Form von Kraut und/oder Krautbestandteilen vereinfacht unmittelbar in eine Auffangvorrichtung bzw. auf eine Abfördervorrichtung blasen, auf der sie schwerkraftbedingt liegen bleiben. Insbesondere lässt sich die beschriebene Vorteilskombination bei größeren Radienverhältnissen, insbesondere von mehr als 3, selbst dann erreichen, wenn die Ebene durch die Rotationsachsen in Förderrichtung aufwärts verläuft. Weiterhin wird durch das gegenüber dem Zuförderelement kleinere Abförderlement eine durch die beiden Förderelemente begrenzte tiefe, lokal im Wesentlichen V-förmige Rinne oberhalb des Trennspaltes vermieden, die eine kontinuierliche Führung des Hackfruchtstroms über den Trennspalt erschwerte, ohne auf den beschriebenen Vorteil des größeren Zuförderelementes verzichten zu müssen. Das kleinere Abförderelement verringert bzw. vermeidet je nach Hackfruchtgröße einen Anstieg, den die Hackfrüchte beim Verlassen des Bereichs oberhalb des Trennspaltes überwinden müssen und der somit einen kontinuierlichen Hackfruchtstrom behindert.

Insbesondere hat das Zuförderelement einen Radius von mindestens 25 mm, bevorzugt von mindestens 50 mm, der Radius beträgt vorzugsweise höchstens 150 mm. Demgegenüber hat das Abförderelement insbesondere einen Radius von mindestens 25 mm, bevorzugt von mindestens 50 mm, dieser Radius beträgt vorzugsweise höchstens 100 mm. Durch diese Größen lässt sich eine Auslassöffnung besonders einfach vollständig unterhalb des Zuförderelementes positionieren, die einen derart dimensionierten Auslassöffnungsquerschnitt aufweist, der einen besonders effektiven Fluidstrom ermöglicht. Außerdem muss der austretende Fluidstrom zwischen der Auslassöffnung und dem Trennspalt dann zumindest nicht signifikant umgeleitet werden. Außerdem wird der Bauraumanspruch gering gehalten und somit die Reinigungsleistung pro Förderweg maximiert.

Vorzugsweise ist eine durch die Rotationsachse des Zuförderelementes und die Rotationsachse des Abförderelementes aufgespannt Ebene, insbesondere die Rotationsachsenebene, relativ zu einer Horizontalen verschwenkt angeordnet. Die Ebene ist relativ zu der Horizontalen insbesondere um zumindest 5°, bevorzugt um 10°, besonders bevorzugt um zumindest 20°, verschwenkt. Insbesondere ist die Rotationsachse des Zuförderelementes höher angeordnet als die Rotationsachse des Abförderelementes. Bei einem relativ zum Abförderelement gleich großen oder größeren Zuförderelement ist dadurch insbesondere eine Fallstufe für die zu reinigenden Früchte hergestellt, durch die im Betrieb mechanisch Beimengungen, insbesondere Kraut, von den Hackfrüchten gelöst wird, wobei die Förderrichtung bevorzugt ebenso wie die Ebene relativ zur Horizontalen geneigt ist. Alternativ ist die Rotationsachse des Abförderelementes höher angeordnet als die Rotationsachse des Zuförderelementes. Dadurch wird eine umfangreichere Eigenbewegung der Hackfrüchte erzeugt, ohne dass diese den Trennspalt zu schnell überwinden, wobei insbesondere eine verstärkte gegenseitige Reinigung der Hackfrüchte stattfindet. Die Ebene ist relativ zur Horizontalen insbesondere um maximal 70°, bevorzugt um maximal 40°, verschwenkt angeordnet. Durch die Verschwenkung haben die Früchte eine zur Reinigung vorteilhafte Bewegungsdynamik. Insbesondere ist bei abwärtsgerichteter Förderrichtung und somit schwerkraftunterstützter Förderung die Reinigung höherer Hackfruchtmengen möglich. Außerdem ist es für einen weiten Bereich von Radien des Zuförderelementes und des Abförderelementes vereinfacht möglich, einen Fluidstrom zu erzeugen, der möglichst ohne weitere Umlenkung von der Auslassöffnung durch den Trennspalt tritt und gleichzeitig relativ zu einer Vertikalen geneigt ist. Dadurch können die durch den Fluidstrom abzutrennenden Beimengungen in eine Auffangvorrichtung bzw. auf eine Abfördervorrichtung befördert werden und ein Zurückfallen der genannten Beimengungen auf den Strom von Früchten zuverlässig vermieden werden.

Bevorzugt hat die zumindest eine Auslassöffnung eine Erstreckung in eine zur Rotationsachse des Zuförderelementes parallele Richtung, die mindestens dem zweifachen Abstand von dem Zuförderelement und dem Abförderelement im Bereich des Trennspaltes entspricht. Insbesondere hat die Auslassöffnung eine zu der Rotationsachse parallele Erstreckung, die zumindest im Wesentlichen, d.h. zu zumindest 50 %, insbesondere zu zumindest 90 %, der axialen Erstreckung des Zuförderelementes entspricht. Durch diese Erstreckung bzw. Breite der Auslassöffnung kann eine besonders gleichmäßige und über die gesamte Breite der Trennvorrichtung laminare Fluidströmung ausgebildet werden. Es hat sich etwa gezeigt, dass durch eine Auslassöffnung mit einem runden Querschnitt vermehrt Turbulenzen in der Fluidströmung auftreten, die bereits ab einer Breite der Auslassöffnung, welche der zweifachen Trennspaltweite entspricht, weitgehend vermieden werden können. Etwaige im Bereich der Auslassöffnung angeordnete und sich insbesondere hauptsächlich in Strömungsrichtung erstreckende, die Fluidleiteinrichtung stabilisierende bzw. aussteifende Stabilisationsstege werden dabei nicht als Grenze der Auslassöffnung angesehen.

Bevorzugt hat die Trennvorrichtung eine Mehrzahl von Trennpaaren, die jeweils ein Zuförderelement und ein Abförderelement aufweisen. Jedes der Trennpaare hat somit einen Trennspalt, wobei zumindest einem Trennspalt eine Auslassöffnung zugeordnet ist. Bei in Förderrichtung benachbarten Trennpaaren ist das Abförderelement eines ersten Trennpaares dabei bevorzugt gleichzeitig das Zuförderelement eines zweiten Trennpaares. Damit lässt sich die erfindungsgemäße Trennvorrichtung konstruktiv besonders einfach mit einer erhöhten Trennleistung umsetzen.

Besonders bevorzugt ist die Fluidleiteinrichtung zum Leiten eines Fluidstroms durch den Trennspalt eines relativ zu zumindest einem ersten Trennpaar stromabwärts angeordneten Trennpaar ausgebildet. Dadurch ist eine insofern besonders effiziente Trennvorrichtung ausgebildet, als dass durch den ersten, stromaufwärts angeordneten Trennspalt insbesondere schwerere Beimengungen, wie auch bei bekannten, gattungsgemäßen Trennvorrichtungen, abgetrennt werden und erst im Bereich des stromabwärts angeordneten Trennspaltes leichtere Beimengungen durch den Fluidstrom abgetrennt werden, nachdem diese durch eine vorherige Ausscheidung der schwereren Beimengungen bereits leichter, mit einem geringeren Energie- bzw. Fluidaufwand, abtrennbar sind.

Besonders bevorzugt hat die Fluidleiteinrichtung zumindest zwei, insbesondere zumindest drei, vorzugsweise zumindest vier Auslassöffnungen, durch die die Fluidleiteinrichtung je einem Trennspalt im Betrieb einen Fluidstrom zuleitet. Insbesondere sind Auslassöffnungen dabei in Förderrichtung aufeinanderfolgender Trennspalten zugeordnet. Durch diese Ausbildung kann die Trennleistung vervielfacht werden und bereits auf geringem Bauraum eine hohe Trennleistung erreicht werden.

Erfindungsgemäß weist die Fluidleiteinrichtung im Bereich der Auslassöffnung ein im Betrieb ortsfestes Abstreifelement zum Abstreifen von Beimengungen vom Zuförderelement auf. Das Abstreifelement ist insbesondere aus Kunststoff oder Edelstahl ausgebildet und liegt im Betrieb insbesondere am Zuförderelement an oder ist davon minimal beabstandet, wobei der Abstand bevorzugt einstellbar ist. Das Abstreifelement hat insbesondere eine zur Oberflächenkontur des Zuförderelementes bzw. Abförderelementes korrespondierende Abstreifkontur. Bevorzugt hat das Abstreifelement zum Zuförderelement im Längsschnitt im unteren, rechten Quadranten des Zuförderelementes einen minimalen Abstand bzw. Kontakt dazu.

Das Abstreifelement dient im Betrieb insbesondere dem Abstreifen von auf dem Zuförderelement abgelagerten Beimengungen, die den Trennspalt verengten. Das Abstreifelement als Teil der Fluidleiteinrichtung dient zusätzlich vorzugsweise zum Leiten des Fluidstroms zum Trennspalt, wodurch ihm zwei zentrale Funktionen zur Erhöhung der Trennleistung zukommen. Konstruktiv bietet die Fluidleiteinrichtung dem Abstreifelement eine besonders stabile Abstützung, insbesondere bei einer Befestigung dessen an einem Teil der Fluidleiteinrichtung, der in einem Längsschnitt der Trennvorrichtung nicht geradlinig verläuft und somit selbst gegenüber einer Biegung um eine quer zur Längsschnittebene verlaufende Biegeachse versteift ist. Gleichzeitig wird durch die Kombination von Abstreifelement und Fluidleiteinrichtung gesonderter Materialaufwand und damit Bauraumaufwand vermieden. Das Gehäuse der Fluidleiteinrichtung dient somit neben seinem eigentlichen Zweck der Versteifung bzw. Lagerung des Abstreifelementes. Dadurch ist sowohl eine zuverlässige Konstruktion als auch eine zuverlässigere Trennwirkung der Trennvorrichtung erreicht.

Besonders bevorzugt begrenzt das Abstreifelement die Auslassöffnung zumindest teilweise, wobei das Abstreifelement insbesondere einteilig mit dem vorbezeichneten Leitelement ausgebildet ist. Dabei verlässt der Fluidstrom die Fluidleiteinrichtung unmittelbar vom Abstreifelement, wobei dieses den Fluidstrom mit auf den Trennspalt ausrichtet. Durch diese Ausbildung kann der für die Trennvorrichtung nötige Materialaufwand ebenso wie der Bauraum auf ein Minimum beschränkt werden, wodurch die erfindungsgemäße Trennvorrichtung gegenüber Konventionellen bezüglich des Platzbedarfs keine Nachteile und dadurch eine erhöhte Trennleistungsdichte hat.

Vorzugsweise ist das Abstreifelement lösbar festgelegt. Dadurch lässt sich das Abstreifelement nach fortgeschrittener Abrasion bzw. nach fortgeschrittenem Verschleiß dessen gesondert austauschen, ohne dass dazu ein Austausch weiterer Bestandteile der Fluidleiteinrichtung nötig wäre. Insbesondere ist das Abstreifelement dabei an einem in eine Fluidströmungsrichtung vorgelagerten Gehäuseelement der Fluidleiteinrichtung lösbar festgelegt, insbesondere über Klemmen, Schrauben o. dgl., welche bevorzugt quer zur Förderrichtung entlang der Breite des Abstreifelementes verteilt sind.

Das Abstreifelement hat in seinem Längsschnitt besonders bevorzugt einen relativ zur Rotationsachse des Zuförderelementes zumindest anteilig in dessen Umlaufrichtung gerichteten Verlauf und verläuft vorzugsweise insofern entgegen dessen Umlaufrichtung, als dass das Abstreifelement in einer der Rotationsachsen nächstgelegenen Abstreifkante mündet. Durch diese Ausbildung werden abgestreifte Beimengungen bestmöglich unmittelbar vom Fluidstrom erfasst und ist eine besonders materialschonende Abstreifung der Beimengungen ermöglicht.

In einer vorteilhaften Ausgestaltung der Erfindung hat die Trennvorrichtung ein insbesondere hydraulisch oder elektrisch angetriebenes Gebläse. Alternativ wird die Fluidleiteinrichtung vorzugsweise durch eine angeschlossene Antriebsmaschine, etwa einen Traktor, mit Druckluft versorgt. Bevorzugt hat die Trennvorrichtung lediglich genau ein Gebläse zur Speisung einer Fluidleiteinrichtung mit einer Mehrzahl von Auslassöffnungen.

Weiterhin wird die Aufgabe erfindungsgemäß durch eine Fördervorrichtung gelöst, die eine vorbeschriebene Trennvorrichtung aufweist. Die Fördervorrichtung ist insbesondere zur Einlagerung von Erntegut, vorzugsweise Hackfrüchten, ausgebildet. Die Fördervorrichtung umfasst stromaufwärts der Trennvorrichtung einen Aufnahmebereich, insbesondere einen Bunker, zur Aufnahme des zu fördernden Erntegutes und einen insbesondere oberhalb des Aufnahmebereichs angeordneten Abgabebereich zur Abgabe der Hackfrüchte. Der Abgabebereich ist insbesondere stromabwärts der Trennvorrichtung ausgebildet.

Bevorzugt umfasst die Fördervorrichtung eine Krautabfördervorrichtung. Diese ist insbesondere als Ansaugvorrichtung ausgebildet, die insbesondere im Betrieb in Fluidkommunikation mit der Fluidleiteinrichtung steht. Besonders bevorzugt wird eine oberhalb des Trennspaltes angesaugte Luft dabei anschließend zumindest teilweise durch die Auslassöffnung geleitet. Alternativ ist die Krautabfördervorrichtung bevorzugt als Krautabförderband ausgebildet, das insbesondere zumindest teilweise oberhalb der Trennvorrichtung angeordnet ist und worauf abgetrenntes Kraut insbesondere durch den Fluidstrom geblasen wird.

Bevorzugt umfasst die Fördervorrichtung eine Erdabfördervorrichtung, die unterhalb der Trennvorrichtung angeordnet ist und insbesondere im Betrieb quer zur Förderrichtung umläuft und dabei durch den Trennspalt hindurchgetretene Beimengungen abfördert.

Weitere Einzelheiten und Vorteile der Erfindung sind den nachfolgend beschriebenen, schematisch dargestellten Ausführungsbeispielen zu entnehmen; es zeigen:
- Fig. 1: eine Seitenansicht einer ersten erfindungsgemäßen Trennvorrichtung,
- Fig. 2: eine Seitenansicht einer zweiten erfindungsgemäßen Trennvorrichtung im Betrieb,
- Fig. 3: eine Übersichtsdarstellung der Trennvorrichtung gemäß Fig. 2 außer Betrieb,
- Fig. 4: eine Seitenansicht einer weiteren erfindungsgemäßen Trennvorrichtung,
- Fig. 5: eine Übersichtsdarstellung der Trennvorrichtung gemäß Fig. 4,
- Fig. 6: eine Übersichtsdarstellung einer erfindungsgemäßen Fördervorrichtung.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

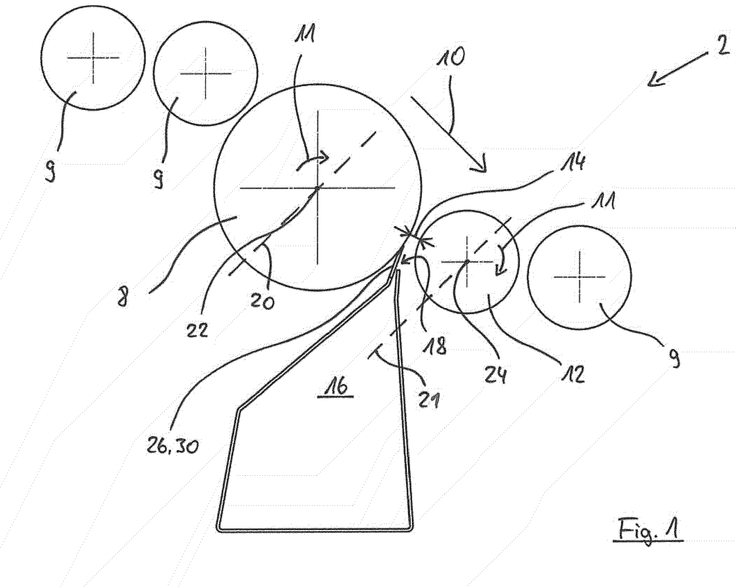

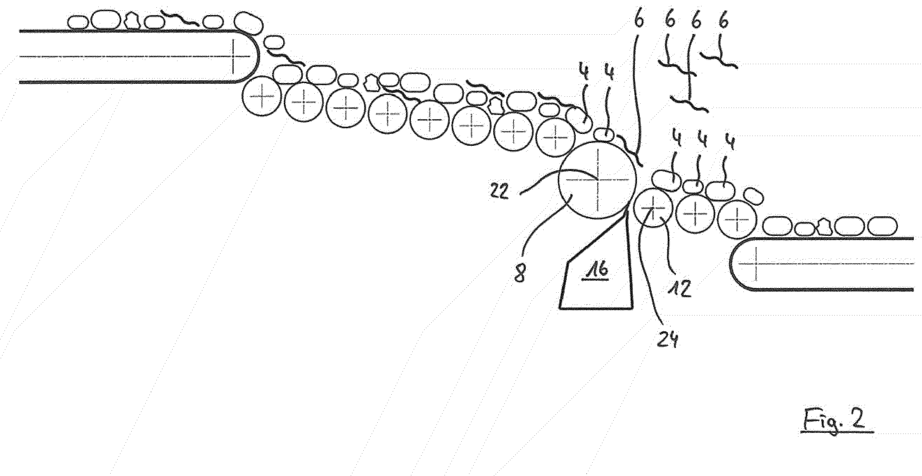

Fig. 1 zeigt eine erfindungsgemäße Trennvorrichtung 2 zur Trennung von Früchten 4, insbesondere Hackfrüchten, und Beimengungen 6 (sh. auch Fig. 2). Die Trennvorrichtung 2 hat eine Förderstrecke mit einem im Betrieb umlaufenden Zuförderelement 8 und einem im Betrieb umlaufenden und sich in eine Förderrichtung 10 an das Zuförderelement 8 anschließenden Abförderelement 12. Das Zuförderelement 8 und das Abförderelement 12 sind als Walzen mit einer im Betrieb identischen Umlaufrichtung 11 ausgebildet. In Förderrichtung 10 dem Zuförderelement 8 vorgelagert sind zwei weitere, im Betrieb umlaufende Förderelemente 9 angeordnet. In Förderrichtung 10 dem Abförderelement 12 nachgeordnet befindet sich ein weiteres, im Betrieb umlaufendes Förderelement 9.

Sowohl das Zuförderelement 8 als auch das Abförderelement 12 haben in ihrer Umlaufrichtung 11, um ihre Rotationsachsen 22, 24, eine geschlossene und für die Früchte 4 und die Beimengungen 6 undurchlässige Förderfläche, auf welcher die Früchte 4 im Betrieb zumindest teilweise zeitweise aufliegen. Das Zuförderelement 8 und das Abförderelement 12 sind derart voneinander beabstandet, dass sie einen Trennspalt 14 ausbilden. Der Trennspalt 14 erstreckt sich in einer nicht dargestellten Rotationsachsenebene, in welcher die Rotationsachsen 22, 24 angeordnet sind.

Im Betrieb werden die zu reinigenden Früchte 4 zuerst auf das ganz links und höchstliegende Förderelement 9 aufgebracht und gelangen von dort über das zweite stromaufwärts des Zuförderelementes 8 angeordnete Förderelement 9 und das Zuförderelement 8, welche allesamt insbesondere gleichsinnig umlaufen, in den Bereich oberhalb des Trennspaltes 14. Von dem Bereich abgefördert werden die Früchte 4 durch das Abförderelement 12 sowie das dem Abförderelement 12 nachgeschaltete, rechts liegende Förderelement 9, welche insbesondere wiederum jeweils gleichsinnig mit dem Zuförderelement 8 rotieren. Im Betrieb treten Beimengungen 6 höherer Dichte und geringeren Volumens, wie z. B. Erdreste oder Kluten, durch den Trennspalt 14, wobei der Trennspalt 14 so schmal ist, dass Früchte 4 nicht durch diesen hindurchtreten. Weitere Beimengungen können durch die in Förderrichtung 10 vor- und nachgelagerten Spalte fallen.

Die Trennvorrichtung 2 hat eine in Fig. 1 schematisch dargestellte Fluidleiteinrichtung 16 zum Leiten eines Fluidstroms durch den Trennspalt 14. Die Fluidleiteinrichtung 16 hat in dem Trennspalt 14 zugewandten Bereich eine Auslassöffnung 18, durch die im Betrieb ein Fluidstrom aus der Fluidleiteinrichtung 16 ausströmt in Richtung des Trennspaltes 14. Die Auslassöffnung 18 ist zwischen zwei gedachten Orthogonalebenen 20, 21 angeordnet. Beide Orthogonalebenen 20, 21 sind orthogonal zur Förderrichtung 10 angeordnet, wobei in der ersten Orthogonalebene 20 eine Rotationsachse 22 des Zuförderelementes 8 angeordnet ist und in der zweiten Orthogonalebene 21 eine Rotationsachse 24 des Abförderelementes 12 angeordnet ist. Die Auslassöffnung 18 ist somit unmittelbar benachbart zum Trennspalt 14, insbesondere unterhalb des Trennspaltes 14 angeordnet. Die Auslassöffnung 18 ist dabei gänzlich unterhalb des Zuförderelementes 8 angeordnet.

Ein Leitelement 26 der Fluidleiteinrichtung 16, welches insbesondere die Auslassöffnung 18 mit begrenzt, ist abschnittsweise oberhalb der Auslassöffnung 18 angeordnet und deckt sie somit ab. Insbesondere erstreckt sich das Leitelement 26 von einer in Förderrichtung 10 vor der Auslassöffnung 18 verlaufenden Vertikalen bis zu einer in Förderrichtung 10 hinter der Auslassöffnung 18 verlaufenden Vertikalen. Die Vertikalen sind dabei insbesondere orthogonal zur Bodenfläche der Fluidleiteinrichtung 16.

Sowohl das Zuförderelement 8 als auch das Abförderelement 12 sind als Glattwalzen ausgebildet, wodurch die Position und die Erstreckung des Trennspaltes 14 im Betrieb konstant bleiben. Der Radius des Zuförderelementes 8 ist dabei im Wesentlichen doppelt so groß wie der Radius des Abförderelementes 12, d.h. das Radienverhältnis beträgt 2 ± 10 %. Eine durch die Rotationsachsen 22, 24 aufgespannte Ebene ist relativ zu einer Horizontalen, die insbesondere parallel zur von dem Zuförderelement 8 abgewandten Bodenfläche der Fluidleiteinrichtung 16 ist, um mehr als 20° verschwenkt.

Fig. 1 zeigt außerdem ein ortsfestes Abstreifelement 30, das einteilig mit dem Leitelement 26 ausgebildet ist. Das Abstreifelement 30 liegt im Betrieb am Zuförderelement 8 an bzw. hat einen geringstmöglichen Abstand davon. Das Abstreifelement 30 ist lösbar an einem in Fluidströmungsrichtung vorgelagerten Gehäuseelement der Fluidleiteinrichtung 16 festgelegt, um es nach fortgeschrittenem Verschleiß, insbesondere einer dem Zuförderelement 8 zugewandten Abstreifkante, wechseln zu können.

Fig. 2 zeigt schematisch die Wirkung der Fluidleiteinrichtung 16. Im Betrieb leitet diese einen Fluidstrom durch den Trennspalt 14, durch den Beimengungen 6, insbesondere Kraut, angehoben und von der Förderstrecke nach oben abgeblasen werden. Die Früchte 4 dagegen werden aufgrund ihrer höheren Dichte weiter entlang der Förderstrecke gefördert.

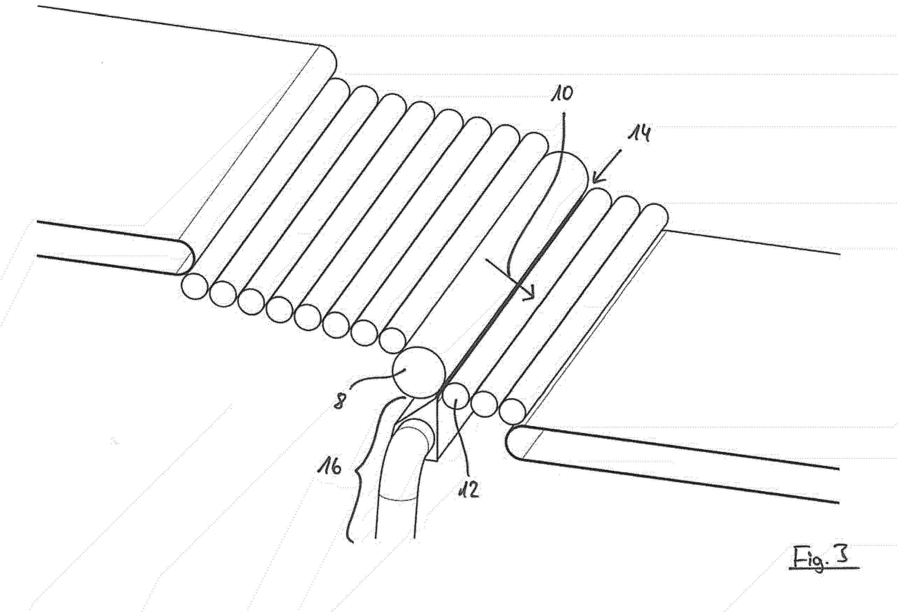

Fig. 3 zeigt, dass die Auslassöffnung 18 eine Erstreckung in eine zur Rotationsachse 22 des Zuförderelementes 8 parallele Richtung hat, die der Erstreckung des Zuförderelementes 8 und insbesondere auch des Trennspaltes 14 in dieselbe Richtung entspricht. Dadurch wirkt der Fluidstrom über die gesamte Breite auf das Erntegut ein. Der Fluidstrom bzw. die Fluidströme werden insbesondere durch ein zentrales Gebläse der Trennvorrichtung 2 erzeugt.

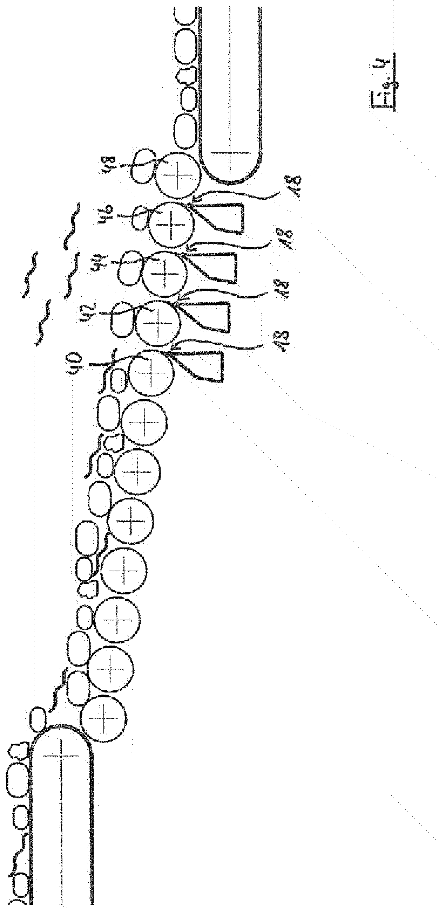

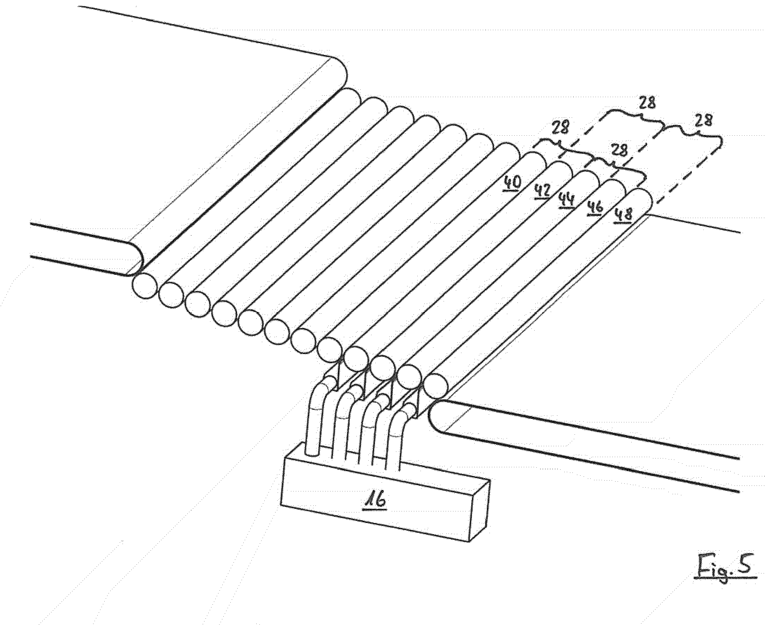

In der Ausgestaltungsform gemäß Fig. 4 und 5 (Fig. 4 mit einer nur schematischen Darstellung der Fluidleiteinrichtung 16) hat die Trennvorrichtung 2 eine Mehrzahl von Trennpaaren 28. Jedes Trennpaar 28 umfasst zwei der in Förderrichtung aneinander anschließenden Trennförderelemente 40, 42, 44, 46, 48. Das Zuförderelement des relativ zur Förderrichtung 10 ersten Trennpaares 28 ist als Trennförderelement 40 ausgebildet, das Abförderelement 12 des relativ zur Förderrichtung 10 letzten Trennpaares 28 ist als Trennförderelement 48 ausgebildet. Die weiteren Trennförderelemente 42, 44, 46 bilden sowohl ein Zuförderelement 8 eines Trennpaares 28 als auch ein Abförderelement 12 eines davon abweichenden Trennpaares aus.

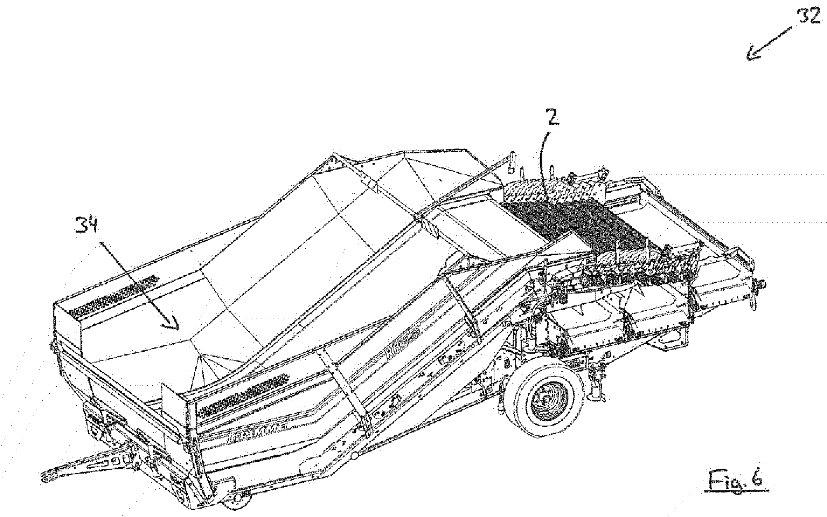

Fig. 6 zeigt eine Fördervorrichtung 32 zur Einlagerung von Hackfrüchten mit einer Trennvorrichtung 2. Die Fördervorrichtung 32 hat einen relativ zur Trennvorrichtung 2 stromaufwärts angeordneten, als Bunker ausgebildeten Aufnahmebereich 34 zur Aufnahme des zu fördernden Erntegutes, wobei im Betrieb die Hackfrüchte insbesondere unmittelbar von einem Transportfahrzeug in den Bunker geladen werden. Stromabwärts hat die Fördervorrichtung 32 einen Abgabebereich zur Abgabe des Erntegutes.

## Patentansprüche

1. Trennvorrichtung (2) zur Trennung von Früchten (4), insbesondere Hackfrüchten, und Beimengungen (6), umfassend eine Förderstrecke mit zumindest einem im Betrieb umlaufenden Zuförderelement (8) und zumindest einem im Betrieb umlaufenden und sich in eine Förderrichtung (10) an das Zuförderelement (8) anschließenden Abförderelement (12), wobei das Zuförderelement (8) und/oder das Abförderelement (12) für die Früchte (4) und die Beimengungen (6) zumindest im Wesentlichen undurchlässig ist/sind sowie das Zuförderelement (8) und das Abförderelement (12) derart voneinander beabstandet sind, dass sie einen Trennspalt (14) ausbilden, wobei die Trennvorrichtung (2) eine Fluidleiteinrichtung (16) zum Leiten eines Fluidstroms durch den Trennspalt (14) aufweist und die Fluidleiteinrichtung (16) eine Auslassöffnung (18) aufweist, die zumindest abschnittsweise, insbesondere gänzlich, zwischen einer ersten zur Förderrichtung (10) orthogonalen Orthogonalebene (20), in der eine Rotationsachse (22) des Zuförderelementes (8) angeordnet ist, und einer zweiten zur Förderrichtung (10) orthogonalen Orthogonalebene (21), in der eine Rotationsachse (24) des Abförderelementes (12) angeordnet ist, positioniert ist, **dadurch gekennzeichnet, dass** die Fluidleiteinrichtung (16) im Bereich der Auslassöffnung (18) ein im Betrieb ortsfestes Abstreifelement (30) zum Abstreifen von Beimengungen (6) vom Zuförderelement (8) aufweist.

2. Trennvorrichtung nach Anspruch 1, **dadurch gekennzeichnet, dass** in einem Längsschnitt die Auslassöffnung (18) zumindest abschnittsweise, insbesondere gänzlich, unterhalb des Zuförderelementes (8) und/oder des Abförderelementes (12) angeordnet ist.

3. Trennvorrichtung nach Anspruch 1 oder 2, **dadurch gekennzeichnet, dass** in einem Längsschnitt ein Leitelement (26) der Fluidleiteinrichtung (16) zumindest abschnittsweise derart oberhalb der Auslassöffnung (18) angeordnet ist, dass es sich von einer in Förderrichtung (10) vor der Auslassöffnung (18) verlaufenden Vertikalen bis zu einer in Förderrichtung (10) hinter der Auslassöffnung (18) verlaufenden Vertikalen erstreckt.

4. Trennvorrichtung nach einem der vorhergehenden Ansprüche, **dadurch gekennzeichnet, dass** eine in einer ortsfesten Radialebene, in der die Rotationsachse (22) des Zuförderelementes (8) angeordnet ist, liegende Oberflächenkontur des Zuförderelementes (8) beim Umlauf des Zuförderelementes (8) unveränderlich ist, wobei das Zuförderelement (8) insbesondere als Glattwalze ausgebildet ist.

5. Trennvorrichtung nach einem der vorhergehenden Ansprüche, **dadurch gekennzeichnet, dass** der Radius des Zuförderelementes (8) insbesondere um zumindest das 1,2-fache, bevorzugt um zumindest das Dreifache, größer ist als der Radius des Abförderelementes (12).

6. Trennvorrichtung nach einem der vorhergehenden Ansprüche, **dadurch gekennzeichnet, dass** eine durch die Rotationsachse (22) des Zuförderelementes (8) und die Rotationsachse (24) des Abförderelementes (12) aufgespannte Ebene relativ zu einer Horizontalen insbesondere um zumindest 5°, bevorzugt um zumindest 10°, besonders bevorzugt um zumindest 20°, verschwenkt angeordnet ist.

7. Trennvorrichtung nach einem der vorhergehenden Ansprüche, **dadurch gekennzeichnet, dass** die zumindest eine Auslassöffnung (18) eine Erstreckung in eine zur Rotationsachse (22) des Zuförderelementes (8) parallele Richtung hat, die mindestens dem zweifachen Abstand von dem Zuförderelement (8) und dem Abförderelement (12) im Bereich des Trennspaltes (14) entspricht.

8. Trennvorrichtung nach einem der vorhergehenden Ansprüche, **gekennzeichnet durch** eine Mehrzahl von Trennpaaren (28), umfassend ein Zuförderelement (8) und ein Abförderelement (12), mit jeweils einem Trennspalt (14), wobei die Fluidleiteinrichtung (16) zum Leiten eines Fluidstroms durch den Trennspalt (14) eines relativ zu zumindest einem ersten Trennpaar (28) stromabwärts angeordneten Trennpaar (28) ausgebildet ist.

9. Trennvorrichtung nach Anspruch 8, **gekennzeichnet durch** zumindest zwei, bevorzugt zumindest drei, besonders bevorzugt zumindest vier jeweils einen Trennspalt (14) eines Trennpaares (28) von unterschiedlichen Trennpaaren (28) zugeordneten Auslassöffnungen (18).

10. Trennvorrichtung nach Anspruch 3, **dadurch gekennzeichnet, dass** das Abstreifelement (30) die Auslassöffnung (18) zumindest teilweise begrenzt, wobei das Abstreifelement (30) insbesondere einteilig mit dem Leitelement (26) ausgebildet ist.

11. Trennvorrichtung nach Anspruch 1, **dadurch gekennzeichnet, dass** das Abstreifelement (30) lösbar insbesondere an einem in eine Fluidströmungsrichtung vorgelagerten Gehäuseelement der Fluidleiteinrichtung (16) festgelegt ist.

12. Fördervorrichtung (32), insbesondere zur Einlagerung von Erntegut, vorzugsweise Hackfrüchten, mit einer Trennvorrichtung (2) nach einem der vorhergehenden Ansprüche, umfassend einen relativ zur Trennvorrichtung stromaufwärts angeordneten, insbesondere als Bunker ausgebildeten Aufnahmebereich (34) zur Aufnahme des zu fördernden Erntegutes und einen stromabwärts und insbesondere oberhalb des Aufnahmebereichs (34) angeordneten Abgabebereich zur Abgabe des Erntegutes.

13. Fördervorrichtung nach Anspruch 12, **gekennzeichnet durch** eine insbesondere als Ansaugvorrichtung oder als bevorzugt zumindest teilweise oberhalb der Trennvorrichtung (2) angeordnetes Krautabförderband ausgebildete Krautabfördervorrichtung.

## Claims

1. Separator (2) for separating fruits (4), in particular root crops, and admixtures (6), comprising a conveyor path with at least one feed element (8) circulating during operation and at least one discharge element (12) circulating during operation and following the feed element (8) in a conveying direction (10), wherein the feed element (8) and/or the conveying element (12) is/are at least substantially impermeable to the fruits (4) and admixtures (6) and the feed element (8) and the discharge element (12) are spaced apart from one another in such a manner that they form a separation gap (14), wherein the separator (2) has a fluid guide device (16) for directing a fluid flow through the separation gap (14) and the fluid guide device (16) has an outlet opening (18) that is arranged at least sectionally, in particular entirely, between a first orthogonal plane (20) orthogonal to the conveying direction (10) in which first plane a rotational axis (22) of the feed element (8) is arranged and a second orthogonal plane (21) orthogonal to the conveying direction (10) in which second plane a rotational axis (24) of the discharge element (12) is arranged, **characterized in that** in the region of the outlet opening (18) the fluid guide device (16) has a scraping element (30) that is stationary during operation for scraping admixtures (6) from the feed element (8).

2. Separator according to Claim 1, **characterized in that** the outlet opening (18) is arranged at least sectionally, in particular entirely, below the feed element (8) and/or the discharge element (12) in a longitudinal section.

3. Separator according to Claim 1 or 2, **characterized in that** in a longitudinal section a guide element (26) of the fluid guide device (16) is at least partially arranged above the outlet opening (18), in such a manner that it extends from a vertical line running in the conveying direction (10) before the outlet opening (18) to a vertical line running in the conveying direction (10) behind the outlet opening (18).

4. Separator according to any one of the preceding claims, **characterized in that** a surface contour of the feed element (8) in a stationary radial plane, in which the rotational axis (22) of the feed element (8) is arranged, remains unchanged during the rotation of the feed element (8), wherein the feed element (8) is particularly designed as a smooth roller.

5. Separator according to any one of the preceding claims, **characterized in that** the radius of the feed element (8) element is at least 1.2 times, preferably at least three times, the radius of the discharge element (12) .

6. Separator according to any one of the preceding claims, **characterized in that** a plane spanned by the rotational axis (22) of the feed element (8) and the rotational axis (24) of the discharge element (12) is arranged inclined relative to a horizontal plane, in particular by at least 5°, preferably by at least 10°, particularly preferably by at least 20°

7. Separator according to any one of the preceding claims, **characterized in that** the at least one outlet opening (18) has an extent in a direction parallel to the rotational axis (22) of the feed element (8) which at least corresponds to twice the distance from the feed element (8) and the discharge element (12) in the region of the separation gap (14).

8. Separator according to any one of the preceding claims, **characterized by** a plurality of separation pairs (28), comprising a feed element (8) and a discharge element (12), each having a separation gap (14), wherein the fluid guide device (16) is designed to direct a fluid flow through the separation gap (14) of a separation pair (28) arranged downstream relative to at least one first separation pair (28).

9. Separator according to Claim 8, **characterized by** at least two, preferably at least three, particularly preferably at least four, outlet openings (18) each assigned to a separation gap (14) of a separation pair (28) of different separation pairs (28).

10. Separator according to Claim 3, **characterized in that** the scraping element (30) at least partially limits the outlet opening (18), wherein the scraping element (30) is particularly integrally formed with the guide element (26).

11. Separator according to Claim 1, **characterized in that** the scraping element (30) is detachably fixed, particularly to an upstream housing element of the fluid guide device (16) in a fluid flow direction.

12. Conveyor device (32), in particular for storing harvested crops, preferably root crops, with a separator (2) according to any one of the preceding claims, comprising an intake area (34) for receiving the harvested crops to be conveyed located upstream of the separator which intake area is particularly designed as a bunker and a discharge area for releasing the harvested crops downstream and particularly above the intake area (34) .

13. Conveyor device according to Claim 12, **characterized by** a haulm removal device particularly designed as a suction device or as a haulm removal device preferably arranged at least partially above the separator (2).

## Revendications

1. Dispositif de séparation (2) destiné à séparer des fruits (4), en particulier des plantes sarclées, et des corps additionnels (6), ledit dispositif comprenant une section de transport pourvue d'au moins un élément d'alimentation (8), qui tourne pendant le fonctionnement, et d'au moins un élément d'évacuation (12) qui tourne pendant le fonctionnement et qui est adjacent à l'élément d'alimentation (8) dans une direction de transport (10), l'élément d'alimentation (8) et/ou l'élément d'évacuation (12) ne laissant pas, au moins sensiblement, passer les fruits (4) et les corps additionnels (6) et l'élément d'alimentation (8) et l'élément d'évacuation (12) étant espacés l'un de l'autre de manière à former un espace de séparation (14), le dispositif de séparation (2) comportant un module de guidage de fluide (16) destiné à guider un écoulement de fluide à travers l'espace de séparation (14) et le module de guidage de fluide (16) comportant une ouverture de sortie (18) qui est positionnée au moins par portions, en particulier totalement, entre un premier plan orthogonal (20), qui est orthogonal à la direction de transport (10) et dans lequel est disposé un axe de rotation (22) de l'élément d'alimentation (8), et un deuxième plan orthogonal (21) qui est orthogonal à la direction de transport (10) et dans lequel est disposé un axe de rotation (24) de l'élément d'évacuation (12),
**caractérisé en ce que** le module de guidage de fluide (16) comporte, dans la zone de l'ouverture de sortie (18), un élément d'enlèvement (30) qui est fixe pendant le fonctionnement et qui est destiné à enlever les corps additionnels (6) de l'élément d'alimentation (8).

2. Dispositif de séparation selon la revendication 1, **caractérisé en ce que**, dans une vue en coupe longitudinale, l'ouverture de sortie (18) est disposée au moins par portions, en particulier totalement, au-dessous de l'élément d'alimentation (8) et/ou de l'élément d'évacuation (12).

3. Dispositif de séparation selon la revendication 1 ou 2, **caractérisé en ce que**, dans une vue en coupe longitudinale, un élément de guidage (26) du moule de guidage de fluide (16) est disposé au moins par portions au-dessus de l'ouverture de sortie (18) de manière à s'étendre depuis la verticale, s'étendant devant l'ouverture de sortie (18) dans la direction de transport (10), jusqu'à une verticale s'étendant derrière l'ouverture de sortie (18) dans la direction de transport (10).

4. Dispositif de séparation selon l'une des revendications précédentes, **caractérisé en ce qu'**un contour de surface de l'élément d'alimentation (8), lequel contour est situé dans un plan radial fixe dans lequel est disposé l'axe de rotation (22) de l'élément d'alimentation (8), est invariable lorsque l'élément d'alimentation (8) tourne, l'élément d'alimentation (8) étant conçu en particulier sous la forme d'un rouleau lisse.

5. Dispositif de séparation selon l'une des revendications précédentes, **caractérisé en ce que** le rayon de l'élément d'alimentation (8) est notamment au moins 1,2 fois, de préférence au moins trois fois, plus grand que le rayon de l'élément d'évacuation (12).

6. Dispositif de séparation selon l'une des revendications précédentes, **caractérisé en ce qu'**un plan passant par l'axe de rotation (22) de l'élément d'alimentation (8) et l'axe de rotation (24) de l'élément d'évacuation (12) est disposé de manière pivotée, en particulier d'au moins 5°, de préférence d'au moins 10°, de manière particulièrement préférée d'au moins 20°, par rapport à l'horizontale.

7. Dispositif de séparation selon l'une des revendications précédentes, **caractérisé en ce que** l'au moins une ouverture de sortie (18) présente dans une direction parallèle à l'axe de rotation (22) de l'élément d'alimentation (8) une extension qui est égale à au moins deux fois la distance de l'élément d'alimentation (8) et qui correspond à l'élément d'évacuation (12) dans la zone de l'espace de séparation (14).

8. Dispositif de séparation selon l'une des revendications précédentes, **caractérisé par** une pluralité de paires de séparation (28), comprenant chacun un élément d'alimentation (8) et un élément d'évacuation (12) pourvus d'un espace de séparation (14), le dispositif de guidage de fluide (16) étant conçu pour guider un écoulement de fluide à travers l'espace de séparation (14) d'une paire de séparation (28) disposée en aval par rapport à au moins une première paire de séparation (28).

9. Dispositif de séparation selon la revendication 8, **caractérisé par** au moins deux, de préférence au moins trois, de manière particulièrement préférée au moins quatre, ouvertures de sortie (18) associées chacune à un espace de séparation (14) d'une paire de séparation (28) parmi différentes paires de séparation (28).

10. Dispositif de séparation selon la revendication 3, **caractérisé en ce que** l'élément d'enlèvement (30) limite au moins partiellement l'ouverture de sortie (18), l'élément d'enlèvement (30) étant notamment formé d'une seule pièce avec l'élément de guidage (26).

11. Dispositif de séparation selon la revendication 1, **caractérisé en ce que** l'élément d'enlèvement (30) est fixé de manière amovible, en particulier à un élément de boîtier du module de guidage de fluide (16) situé en amont dans une direction d'écoulement de fluide.

12. Dispositif de transport (32), destiné notamment au stockage de produits de récolte, de préférence de plantes sarclées et pourvu d'un dispositif de séparation (2) selon l'une des revendications précédentes, ledit dispositif de transport comprenant une zone de réception (34) disposée en amont du dispositif de séparation, notamment conçue comme un réservoir et destinée à recevoir le produit de récolte à transporter et une zone de délivrance disposée en aval et notamment au-dessus de la zone de réception (34) et destinée à délivrer le produit de récolte.

13. Dispositif de transport selon la revendication 12, **caractérisé par** un dispositif d'évacuation de feuilles conçu notamment comme un dispositif d'aspiration ou comme une bande d'évacuation de feuilles disposée de préférence au moins partiellement au-dessus du dispositif de séparation (2).
